# FASCICULE DE BREVET EUROPEEN

(11) **EP 1 503 044 B1**
(45) Date de publication et mention de la délivrance du brevet: **20.06.2007**
(21) Numéro de dépôt: 04291887.0
(22) Date de dépôt: 23.07.2004
(51) Int. Cl.: F01D 21/04, F01D 5/22

(54) **Plate-forme inter-aubes à fléchissement latéral pour un support d'aubes de turboréacteur**
Zwischenschaufelplattformen mit elastischen Seitenkanten
Inter blade platforms with resilient lateral edges

(30) Priorité: 31.07.2003 FR 0309451
(43) Date de publication de la demande: 02.02.2005
(73) Titulaire: SNECMA, 75015 Paris (FR)
(72) Inventeur: Queriault, Michèle Jacqueline, 77000 Melun (FR); Lejars, Claude Robert Louis, 91210 Draveil (FR)
(74) Mandataire: Plaçais, Jean Yves

(56) Documents cités:
- EP-A- 0 787 890
- EP-A- 1 067 274
- WO-A-93/22539
- US-A- 4 655 687
- US-A- 5 277 548
- US-A- 5 443 365
- US-A- 5 853 286

## Description

L'invention concerne le domaine des turboréacteurs, et plus particulièrement celui des plate-formes inter-aubes pour les disques de support d'aubes des soufflantes de turboréacteur.

Comme le sait l'homme de l'art, les soufflantes (ou "fan") de turboréacteur, dont les aubes présentent un pied curviligne, comprennent des disques de support d'aubes équipés de plate-formes inter-aubes rapportées destinées à optimiser l'écoulement de l'air entre les aubes, et plus précisément à reconstituer le profil aérodynamique de la "veine" interne au niveau des aubes.

Le document WO 93/22539 décrit une plate-forme inter-aubes qui comprend une partie centrale solidarisée à un disque entre deux plates-formes adjacentes. La partie centrale comprend deux extrémités latérales qui sont chacune munie d'un joint dont une partie est destinée à se déplacer radialement vers l'extérieur sous l'effet des efforts centrifuges.

Le document US 4,655,687 décrit une plate-forme inter-aubes qui comprend une partie centrale solidarisée à un disque entre deux plates-formes adjacentes qui est muni de deux extrémités latérales qui viennent en butée sur les aubes adjacentes afin de former une paroi annulaire interne de réacteur.

De par leur fonction, les plate-formes inter-aubes présentent des bords latéraux qui, une fois installés, sont placés au plus près des aubes. Or, lorsqu'un incident survient sur une aube, par exemple en raison de l'ingestion d'un corps étranger par le turboréacteur, ladite aube peut se déplacer (ou fléchir) et interférer avec le bord latéral de l'une des plate-formes voisines. Cela peut provoquer des dégâts importants au niveau de l'aube (comme par exemple la formation de "criques" ou de fissurations pouvant entraîner la rupture de l'aube) et/ou au niveau de la plate-forme (comme par exemple un arrachement partiel ou complet).

De tels dégâts entraînent généralement une perte d'efficacité du turboréacteur qui se traduit par une perte de performance, voire sa mise hors service.

L'invention a donc pour but de limiter, voire même supprimer, les conséquences d'une telle interférence.

Elle propose à cet effet une plate-forme inter-aubes, pour un disque de support d'aubes d'une soufflante de turboréacteur, comprenant une partie centrale, propre à être solidarisée audit disque de support entre deux aubes adjacentes, et deux parties latérales prolongeant deux bords latéraux de ladite partie centrale, chaque partie latérale étant propre à fléchir sous l'impact d'une aube. Lesdites parties latérales sont réalisées par amincissement des bords latéraux de ladite partie centrale et sont monobloc avec celle-ci, et en ce qu'au moins lesdites parties latérales sont réalisées dans un matériau à mémoire de forme.

Par conséquent, lorsqu'une aube se déplace, la partie latérale, de la plate-forme avec laquelle elle interfère, va fléchir ou s'écraser, limitant ainsi notablement les dégâts tout en offrant à l'aube une liberté de flexion accrue. La réalisation des parties latérales dans un matériau à mémoire de forme leur permet en outre de reprendre leur forme initiale lorsque l'aube a repris sa position initiale.

La plate-forme selon l'invention peut être réalisée de différentes façons.

Par exemple, la partie centrale peut présenter une première épaisseur, tandis que les parties latérales présentent une seconde épaisseur inférieure à cette première épaisseur. En variante ou en complément, la partie centrale peut présenter une première résistance à la déformation, tandis que les parties latérales présentent une seconde résistance à la déformation inférieure à cette première résistance.

Une telle plate-forme peut être réalisée, au moins au niveau de ses parties latérales, dans un matériau métallique.

L'invention concerne également un disque de support d'aubes comportant une multiplicité de plate-formes inter-aubes du type de celle présentée ci-avant et respectivement intercalées entre des paires d'aubes adjacentes.

D'autres caractéristiques et avantages de l'invention apparaîtront à l'examen de la description détaillée ci-après, et des dessins annexés, sur lesquels :
- la figure 1 illustre de façon schématique une partie d'un disque de support d'aubes dans une vue de face, et
- la figure 2 illustre de façon schématique, dans une vue de côté, un mode de réalisation d'une plate-forme inter-aubes selon l'invention.

Les dessins annexés pourront non seulement servir à compléter l'invention, mais aussi contribuer à sa définition, le cas échéant.

L'invention porte sur une plate-forme inter-aubes destinée à équiper un disque de support d'aubes pour une soufflante (ou "fan") de turboréacteur équipée d'aubes à pied curviligne (également appelées aubes "large corde").

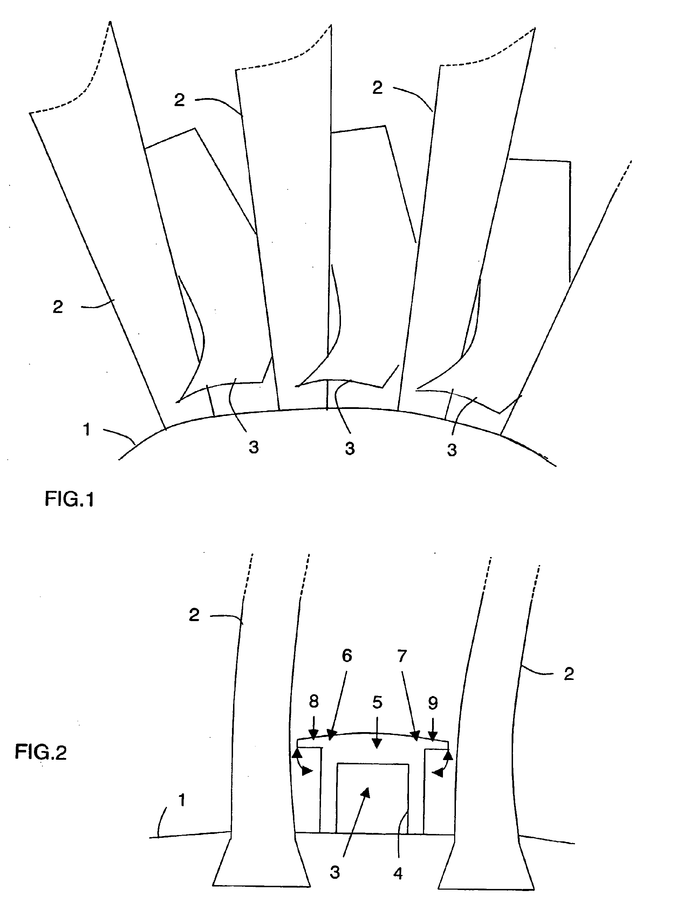

Comme cela est partiellement illustré sur la figure 1, un disque de support d'aubes 1 est un élément d'une soufflante (non représentée), monté sur un arbre de rotor et sur lequel sont fixés une multiplicité d'aubes 2, à pied curviligne, et une multiplicité de plate-formes inter-aubes 3 rapportées. Plus précisément, chaque plate-forme 3 est installée sur le disque de support 1, entre deux aubes 2 adjacentes de manière à reconstituer le profil aérodynamique de la "veine" interne au niveau des aubes.

Chaque plate-forme rapportée 3 comprend généralement deux ou trois pattes de fixation soit solidarisées à des pattes de fixation du disque de support 1 par des pions de fixation, soit coopérant avec des logements adaptés dudit disque.

Dans l'exemple de réalisation illustré sur la figure 2, la plate-forme 3 est solidarisée au disque de support 1 par des pattes de fixation 4 (une seule est ici représentée du fait de la vue en coupe transversale).

Selon l'invention, la plate-forme 3 comprend une partie centrale 5 solidarisée, une fois installée, au disque de support 1 (par exemple par l'intermédiaire des pattes de fixation 4). Cette partie centrale 5 comprend deux bords latéraux 6 et 7 placés chacun en regard d'une aube 2 et prolongés chacun par une partie latérale 8 ou 9.

Chaque partie latérale 8, 9 est destinée à recevoir un élément (ou joint) destiné à assurer l'étanchéité entre la plate-forme et l'aube adjacente. Cet élément (non représenté) est de préférence réalisé en caoutchouc ou l'un de ses dérivés.

Selon l'invention, chaque partie latérale 8, 9 est conçue de manière à fléchir, ou s'écraser, sensiblement selon les flèches, sous l'impact de l'aube 2 en regard de laquelle elle est placée, lorsque celle-ci est contrainte, par exemple du fait d'une ingestion, à se déplacer vers elle.

Pour obtenir cette flexion (élastique ou non) en cas de pression exercée par l'aube voisine 2, la plate-forme peut être réalisée de différentes façons.

Un premier mode de réalisation, illustré sur la figure 2, consiste à former les parties latérales 8 et 9 par amincissement, local ou général, des bords latéraux 6 et 7 de la plate-forme 3.

L'amincissement est préférentiellement important de manière à faciliter le fléchissement ou l'écrasement. En d'autres termes, l'épaisseur des parties latérales 8 et 9 et beaucoup plus petite que celle de la partie centrale 5.

Dans ce premier mode de réalisation, la partie centrale 5 et les parties latérales 8 et 9 constituent donc un élément monobloc.

Un second mode de réalisation consiste à former la partie centrale 5 et les parties latérales 8 et 9 dans des matériaux présentant des résistances à la déformation différentes. Plus précisément, il faut que la résistance à la déformation de la partie centrale 5 soit sensiblement supérieure à celle des parties latérales 8 et 9.

Pour obtenir cette différence de résistance, deux solutions peuvent être envisagées.

Une première solution consiste à modifier certaines caractéristiques physiques de la partie centrale 5 ou des parties latérales 8 et 9, par exemple par exposition sous un faisceau de particules approprié. On peut en effet soit augmenter la résistance de la partie centrale 5, soit diminuer celle des parties latérales 8 et 9. Dans ce cas, comme dans le premier mode de réalisation, la partie centrale 5 et les parties latérales 8 et 9 constituent un élément monobloc. Il est important de noter que l'on peut combiner ce mode de réalisation avec le premier mode de réalisation en réalisant un amincissement et une modification de certaines caractéristiques physiques.

Une seconde solution consiste à former la plate-forme 3 par solidarisation des parties latérales 8 et 9 à la partie centrale 5, par exemple par soudage ou collage. La partie centrale 5 et les parties latérales 8 et 9 sont alors préférentiellement réalisées dans des matériaux différents et/ou présentant des caractéristiques physiques différentes (notamment en matière de résistance à la déformation). On peut ici également envisager d'utiliser des parties latérales 8 et 9 moins épaisses que la partie centrale 5.

Afin que les parties latérales 8 et 9 de la plate-forme 3 puissent reprendre leur forme initiale lorsque l'aube a repris sa position initiale, elles peuvent être réalisées dans un matériau à mémoire de forme.

La plate-forme 3 selon l'invention est préférentiellement réalisée par usinage d'un bloc métallique, par exemple en aluminium. Mais, elle pourrait être réalisée dans un autre matériau, comme un matériau composite.

L'invention ne se limite pas aux modes de réalisation de plate-forme inter-aubes et de disque de support d'aubes décrits ci-avant, seulement à titre d'exemple, mais elle englobe toutes les variantes que pourra envisager l'homme de l'art dans le cadre des revendications ci-après.

## Revendications

1. Plate-forme inter-aubes (3) pour un disque (1) de support d'aubes (2) d'une soufflante de turboréacteur, comprenant une partie centrale (5), propre à être solidarisée audit disque de support (1) entre deux aubes adjacentes (2), et deux parties latérales (8,9) prolongeant deux bords latéraux (6,7) de ladite partie centrale (5), chaque partie latérale étant propre à fléchir sous l'impact d'une aube (2), **caractérisée en ce que** lesdites parties latérales (8,9) sont réalisées par amincissement des bords latéraux (6,7) de ladite partie centrale (5) et sont monobloc avec celle-ci, et **en ce qu'**au moins lesdites parties latérales (8,9) sont réalisées dans un matériau à mémoire de forme.

2. Plate-forme selon la revendication 1, **caractérisée en ce que** ladite partie centrale (5) présente une première épaisseur, et **en ce que** lesdites parties latérales (8,9) présentent une seconde épaisseur inférieure à ladite première épaisseur.

3. Plate-forme selon l'une des revendications 1 et 2, **caractérisée en ce que** ladite partie centrale (5) présente une première résistance à la déformation, et **en ce que** lesdites parties latérales (8,9) présentent une seconde résistance à la déformation inférieure à ladite première résistance.

4. Plate-forme selon l'une des revendications 1 à 3, **caractérisée en ce qu'**elle est réalisée dans un matériau métallique.

5. Plate-forme selon l'une des revendications 1 à 3, **caractérisée en ce qu'**elle est réalisée dans un matériau composite.

6. Disque de support d'aubes (1), **caractérisé en ce qu'**il comporte une multiplicité de plate-formes inter-aubes (3) selon l'une des revendications précédentes, respectivement intercalées entre des paires d'aubes (2) adjacentes.

## Claims

1. Inter-blade platform (3) for a disc (1) for supporting blades (2) of a turbojet fan, comprising a central portion (5), capable of being fixedly attached to said supporting disc (1) between two adjacent blades (2), and two lateral portions (8, 9) extending two lateral edges (6, 7) of said central portion (5), each lateral portion being capable of flexing under the impact of a blade (2), **characterized in that** the said lateral portions (8, 9) are made by thinning the lateral edges (6, 7) of the said central portion (5) and are made in one piece with the latter, and **in that** at least the said lateral portions (8, 9) are made in a shape-memory material.

2. Platform according to Claim 1, **characterized in that** the said central portion (5) has a first thickness, and **in that** the said lateral portions (8, 9) have a second thickness thinner than the said first thickness.

3. Platform according to one of Claims 1 and 2, **characterized in that** the said central portion (5) has a first deformation resistance, and **in that** the said lateral portions (8, 9) have a second deformation resistance weaker than the said first resistance.

4. Platform according to one of Claims 1 to 3, **characterized in that** it is made of a metal material.

5. Platform according to one of Claims 1 to 3, **characterized in that** it is made of a composite material.

6. Blade-supporting disc (1), **characterized in that** it comprises a multiplicity of inter-blade platforms (3) according to one of the preceding claims, respectively interposed between pairs of adjacent blades (2).

## Patentansprüche

1. Zwischenschaufel-Plattform (3) für eine Stützscheibe (1) für Schaufeln (2) eines Turbotriebwerksgebläses, mit einem zentralen Teil (5), der geeignet ist, mit dieser Stützscheibe (1) zwischen zwei benachbarten Schaufeln (2) fest verbunden zu werden, und mit zwei Seitenteilen (8, 9) in Verlängerung von zwei Seitenkanten (6, 7) des zentralen Teils (5), wobei sich jedes Seitenteil unter der Einwirkung einer Schaufel (2) biegen kann,
**dadurch gekennzeichnet,**
**dass** diese Seitenteile (8, 9) durch Verjüngung der Seitenkanten (6, 7) des zentralen Teils (5) hergestellt werden und einstückig mit diesem ausgeführt sind, und dass zumindest diese Seitenteile (8, 9) aus einem Werkstoff mit Formgedächtnis hergestellt sind.

2. Plattform nach Anspruch 1,
**dadurch gekennzeichnet,**
**dass** der zentrale Teil (5) eine erste Dicke aufweist, und dass die genannten Seitenteile (8, 9) eine zweite Dicke aufweisen, die geringer ist als die genannte erste Dicke.

3. Plattform nach einem der Ansprüche 1 und 2,
**dadurch gekennzeichnet,**
**dass** der zentrale Teil (5) einen ersten Widerstand gegen Verformung aufweist, und dass diese Seitenteile (8, 9) einen zweiten Widerstand gegen Verformung aufweisen, der geringer ist als der genannte erste Widerstand.

4. Plattform nach einem der Ansprüche 1 bis 3,
**dadurch gekennzeichnet,**
**dass** sie aus einem metallischen Werkstoff besteht.

5. Plattform nach einem der Ansprüche 1 bis 3,
**dadurch gekennzeichnet,**
**dass** sie aus einem Verbund-Werkstoff besteht.

6. Schaufel-Stützscheibe (1),
**dadurch gekennzeichnet,**
**dass** sie eine Vielzahl von Zwischenschaufel-Plattformen (3) nach einem der vorherigen Ansprüche enthält, die jeweils zwischen benachbarten Paaren von Schaufeln (2) sitzen.
